# EUROPEAN PATENT SPECIFICATION

(11) **EP 3 512 818 B1**
(45) Date of publication and mention of the grant of the patent: **21.06.2023**
(21) Application number: 17787980.6
(22) Date of filing: 15.09.2017
(51) Int. Cl.: C04B 20/12, C04B 26/16, C04B 20/10

(54) **ADHESION PROMOTER COATED PARTICLES FOR POLYMER CONCRETE COMPOSITIONS**
MIT HAFTVERMITTLER BESCHICHTETE PARTIKEL FÜR POLYMERBETONZUSAMMENSETZUNGEN
PARTICULES ENROBÉES DE PROMOTEUR D'ADHÉRENCE POUR COMPOSITIONS DE BÉTON POLYMÈRE

(30) Priority: 16.09.2016 US 201662395460 P
(43) Date of publication of application: 24.07.2019
(73) Proprietor: Dow Global Technologies, LLC, Midland, MI 48674 (US)
(72) Inventor: AOU, Kaoru, Freeport, TX 77541 (US); GOYAL, Sachit, Freeport, TX 77541 (US); COLSON, Adam C., Boise, ID 83705 (US); MEDINA, Juan Carlos, Freeport, TX 77541 (US)
(74) Representative: Beck Greener LLP
(86) International application number: PCT/US2017/051759
(87) International publication number: WO 2018/053250

(56) References cited:
- JP-A- 2007 009 592
- US-A1- 2010 256 295
- DATABASE WPI Week 201401 Thomson Scientific, London, GB; AN 2013-V71874 XP002775877, & KR 101 331 950 B1 (ECO INFRA HOLDINGS) 21 November 2013 (2013-11-21)
- G S Dhaliwal ET AL: "Nano-Engineered Polyurethane Resin-Modified Concrete Faculty Advisors", Sequential NUTC R345 (A National University Transportation Center at Missouri University of Science and Technology), 12 September 2015 (2015-09-12), pages 1-14, XP055423295, Retrieved from the Internet: URL:https://web.archive.org/web/2013010100 0000*/http://transportation.mst.edu/media/ research/transportation/documents/R345 Final Report.pdf [retrieved on 2017-11-09]

## Description

### Field

The field of the invention relates to a method of preparing a polymer concrete composition and a method of repairing a concrete substrate.

### Introduction

Polymer concrete may be used for new construction or repairing of old concrete (repairing a concrete substrate). For example, the polymer concrete may be used for roadway applications (such as for vehicular traffic, airport runways, etc.) and/or structural and infrastructure applications (such as for buildings, swimming pools, sewers, etc.) Polymer concrete may be prepared by mixing aggregates and polymers and then curing the mixture to form a polymer matrix having the aggregate embedded therewithin. The polymers may be thermosetting polymers and/or thermoplastic polymers. The polymers may impart adhesive properties to the cured polymer concrete, e.g., for use in repair applications. For example, the polymers may include thermosetting polymers that when cured provide high thermal stability, high compressive strength, and/or resistance to corrosive species and/or contaminates.

### Summary

The invention is defined by the appended claims 1 to 6. Embodiments may be realized by a method of preparing a polymer concrete composition includes preparing one or more adhesion promoter pre-coated aggregates, each having a base substrate and an adhesion promoter coating and the adhesion promoter coating being an outermost layer on the base substrate, providing a base composition including an isocyanate component and an isocyanate reactive component, and mixing the one or more adhesion promoter pre-coated aggregates, the isocyanate component, and the isocyanate-reactive component to form the polymer concrete composition, wherein the polyurethane based binder is prepared as the reaction product of the isocyanate component and the isocyanate-reactive component in the presence of the one or more adhesion promoter pre-coated aggregates.

### Detailed Description

It has been proposed to additionally include sand thinly coated with an emulsion in an asphalt concrete composition, e.g., as discussed in U.S. Patent No. 5,219,901. It has been proposed in International Publication No. WO 2002/072499 to add chemically treated fibers to cement composites that include a hydraulic binder and aggregates. It has been proposed in U.S. Patent No. 8,653,163 to coat aggregates using a polymer dispersion for improving the stability of concrete to the alkali-silica reactions, but the thin film on the aggregate formed using the polymer dispersion is to enable the addition of functionality to the aggregate. Further, it has been proposed to add adhesion promoters as fillers or additives to polymer concrete compositions, e.g., as discussed in U.S. Patent Publication No. 2012/0110932, for use in solar panels, as a backside composite. Korean Patent Publication KR101331950B describes an ultralight polymer concrete composition, which includes 20-80 weight% of a first resin, 10-30 weight% of a second resin, 2-8 weight% of a silane coating agent, 3-8 weight% of a rigidity enhancer, and 10-25 weight% of an inorganic hollow body, and a molded article obtained by hardening the same. An anti-skid floor with improved long lasting anti-skid performance is proposed in Japanese Patent Publication JP2007-009592. The anti slip properties are improved by enhancing the adhesion of a resin forming an anti-skid layer and aggregate included in the resin to hardly allow the aggregate from being separated, and an anti-skid floor construction method. The layers are formed by spray coating. Dhaliwal et al (Sequential NUTC R345 (2015) pages 1-14) investigated nano-engineered polyurethan emulsions for latex modified concrete. U.S. Patent Publication No. 2010/256295 discusses a process for the production of top layers for roads, tracks, and other areas used by traffic, by producing a mixture comprising mineral material and a polyurethane reaction mixture. Disclosed but not claimed is a polymer concrete composition that is prepared using aggregates that are pre-coated with an adhesion promoter. By pre-coated it is meant that the aggregates, without the presence of any binder (such as polyurethane based binder), are mixed and coated with an adhesion promoter. The pre-coating with the adhesion promoter may be performed at higher than ambient temperature, e.g., to promote a reaction between the adhesion promoter and the aggregates.

The aggregates used in the polymer concrete are coated with an adhesion promoter coating. The aggregate may be a solid particle having a high melting point, such as aggregates that include silica, ceramic, quartz, granite, and/or limestone. The adhesion promoter coating may include, e.g., may include at least 20 wt%, at least 30 wt%, at least 40 wt%, at least 50 wt%, at least 60 wt%, at least 70 wt%, at least 80 wt%, at least 90 wt%, at least 95 wt%, at least 98 wt%, and/or may consist essentially of by weight, of one or more adhesion promoters. The one or more adhesion promoters is a silane based compound, such an aminosilane compound and/or an epoxysilane compound. The adhesion promoter coating may be formed on top of one or more other underlying coatings formed on the aggregates, such as a polyurethane based coating, an epoxy based coating, a phenolic resin based coating, a preformed isocyanurate based coating, and/or an amide based coating, as discussed in U.S. Provisional Application No. 62/395,452 (filed concurrently on September 16, 2016). Other exemplary polymeric coatings that may be usable to form the underlying coatings include radical or photo-cured acrylic polymer coatings and an unsaturated polyester resin based coating.

The polymer concrete composition may include one or more aggregates with different coatings and/or combinations of coatings. The polymeric concrete composition may include a mixture of pre-coated aggregate and non-coated aggregate (e.g., at a weight ratio of 1:9, 2:8, 3:7, 4:6, 5:5, 4:6, 3:7, 8:2, 9:1, relative to each other). In addition to the aggregate, the polymer concrete composition includes a polyurethane base composition for forming the polymer matrix of the cured polymer concrete. The polymer concrete composition may be applied to a surface as a liquid or semi-solid composition and may cure in place to form polymer concrete. By cured it is meant the composition has been sufficiently toughened or hardened (e.g., by cross-linking of polymer chains), such that the material has converted from a liquid state to a solid/semi-solid state.

The adhesion promoter pre-coated aggregate may include one of more coatings that allow for one or more other functions coating, under the adhesion promoter coating. The total amount of coatings may comprise from 0.1 wt% to 10.0 wt% (e.g., 0.3 wt% to 5.0 wt%, 0.3 wt% to 4.0 wt%, 0.3 wt% to 3.5 wt%, etc.) of a total weight of the pre-coated aggregate. In exemplary embodiments, the pre-coated aggregate includes a coating formed on a base substrate (e.g., directly on so as to encompass and/or substantially encompass). The base substrate may be a particle such as silica sand. For example, an exemplary embodiment includes an underlying coating coated on an outer surface of a base substrate such as sand and an overlying adhesion promoter coating coated on the underlying coating. Another embodiment includes a single adhesion promoter coating that optionally includes one or more additives embedded therewithin. If the one or more additives are present, the single adhesion promoter coating may include at last a majority by weight of one or more adhesion promoters. The one or more additives may be added during a process of forming the pre-coated aggregate and/or may be sprinkled onto a previously coated aggregate to form the coating in combination with an additive based coating. Exemplary additives include pigments and contaminant removal/recovery substances.

The adhesion promoter pre-coated aggregate, and specifically the outermost adhesion promoter coating, is formed prior to forming the polymer concrete composition, so as to be a pre-coated aggregate. The pre-coated aggregate may be partially and/or fully cured prior to forming the polymer concrete composition. By cured it is meant the material has been sufficiently toughened or hardened such that a solid/semi-solid coating is formed on the aggregates. For example, the adhesion promoter pre-coated aggregate may be formed at least 1 hour, at least one day, at least one week, at least one month, at least one year, etc., prior to forming the polymer concrete composition. The polymer concrete composition may be formed at the location of intended use, in other words the adhesion promoter pre-coated aggregate and the components used to form the polymer matrix may be mixed on site right before use. For example, the adhesion promoter coating may be pre-coated on the aggregates (e.g., prior to transporting the pre-coated aggregates to the site of use) to simplify use thereof in polymer concrete compositions for in field applications. In such in field applications, the adhesion promoter pre-coated aggregates and a base composition for the polymer concrete may be mixed at the site of use.

Disclosed but not claimed is a cured polymer concrete that includes the polymer concrete composition prepared using the base composition and one or more pre-coated aggregates. Embodiments also relate to a method of preparing the polymer concrete composition, which method includes providing the one or more pre-coated aggregates in a container, adding the first isocyanate component and the first isocyanate-reactive component to the container, and mixing the one or more pre-coated aggregates and the base composition. The invention further relate to a method of repairing a concrete substrate using the polymer concrete composition, the method comprising providing the one or more pre-coated aggregates in a container, adding the first isocyanate component and the first isocyanate-reactive component to the container, mixing the one or more pre-coated aggregates and the base composition to form a mixed polymer concrete composition, and applying the mixed polymer concrete composition to the concrete substrate. The container may be a small container, e.g., used to repair a small area of a concrete substrate, or the container may be a large container, e.g., used to prepare a large concrete substrate or repair a large area of a concrete substrate. The concrete substrate may be usable in or to form roadway applications and/or structural and infrastructure applications (such as for buildings, swimming pools, sewers, etc.)

### Base Composition

The base composition, also referred to as a binder for the polymer concrete, may be prepared as an one-component system or a two-component system. Whereas, the one-component system may be a preformed (pre-reacted) curable polyurethane based composition that is mixed as a single component with the pre-coated aggregate and allowed to cure to form the polymer concrete. For example, the one-component system may be a moisture cured system. The two-component system may be a composition in which separate components are combined immediately before, during, or after mixing with the pre-coated aggregate and the resultant reaction mixture is allowed to cure to form the polymer concrete. The resultant binder includes polyurethane, and/or poly(urethane-isocyanurate) based polymers. For example, the resultant binder may be a polyurethane based binder that forms an elastomeric matrix surrounding the pre-coated aggregates.

The resultant binder may, e.g., have a resilience at 5% deflection of at least 80% (e.g., at least 90%, at least 94%, etc.). The resultant binder may have a Shore A hardness of at least 75 (at least 80, from 80 to 100, from 80 to 90, etc.), according to ASTM D240. The resultant binder may have a gel time at 25°C of at least 3 minutes (e.g., 3 to 10 minutes, 4 to 8 minutes, etc.) to allow for appropriate in-field use (e.g., to allow for adequate mixing time with the pre-coated aggregates and/or to allow for an adequate in place cure time). The resultant binder may have a tensile strength of at least 6.89 MPa (1000 psi) (e.g., from 6.89 MPa to 34.47 MPa (1000 psi to 5000 psi), from 6.89 MPa to 20.68 MPa (1000 psi to 3000 psi), from 6.89 MPa to 13.79 MPa (1000 psi to 2000 psi) etc.), according to ASTM D412. The resultant binder may have a compressive strength of at least 6.89 MPa (1000 psi) (e.g., from 6.89 MPa to 34.47 MPa (1000 psi to 5000 psi), from 13.79 MPa to 27.58 MPa (2000 psi to 4000 psi), from 13.79 MPa to 20.68 MPa (2000 psi to 3000 psi) etc.), according to ASTM C579B.

For example, the base composition for forming the polymer matrix of the polymer concrete (i.e., the cured binder) includes an isocyanate component and an isocyanate-reactive component, which may be introduced as a part of a one-component or two-component system. A polyurethane based matrix is formed as a reaction product of the isocyanate component and the isocyanate-reactive component. The isocyanate based component includes at least one isocyanate, such as at least one polyisocyanate, at least one isocyanate terminated prepolymer derived from at least one polyisocyanate, and/or at least one quasi-prepolymers derived from the polyisocyanates. The isocyanate-reactive component includes one or more polyols. In exemplary embodiments, the isocyanate component and/or the isocyanate-reactive component may include one or more additional additives.

With respect to the isocyanate component for the base composition, exemplary polyisocyanates include aromatic, cycloaliphatic, and aliphatic polyisocyanates. Exemplary isocyanates include toluene diisocyanate (TDI) and variations thereof known to one of ordinary skill in the art, and diphenylmethane diisocyanate (MDI) and variations thereof known to one of ordinary skill in the art. Other isocyanates known in the polyurethane art may be used, e.g., known in the art for polyurethane based coatings. Examples, include modified isocyanates, such as derivatives that contain biuret, urea, carbodiimide, allophanate and/or isocyanurate groups may also be used. Exemplary available isocyanate based products include HYPERLAST ^{™} products, PAPI^{™} products, ISONATE^{™} products and VORANATE^{™} products, VORASTAR^{™} products, HYPOL^{™} products, TERAFORCE^{™} Isocyanates products, available from The Dow Chemical Company.

If included, the isocyanate-terminated prepolymer may have a free isocyanate group (NCO) content of 1 wt% to 35 wt% (e.g., 5 wt% to 30 wt%, 10 wt% to 30 wt%, 15 wt% to 25 wt%, 15 wt% to 20 wt%, etc.), based on the total weight of the prepolymer. If present, one or more isocyanate terminated prepolymers may account for 20 wt% to 100 wt% (e.g., from 20 wt% to 80 wt%, from 30 wt% to 70 wt%, from 40 wt% to 60 wt%, from 45 wt% to 55 wt%, etc.) of the isocyanate component, and a remainder (if present) of the isocyanate component may be one or more polyisocyanates and/or at least one additives. If present, one or more isocyanate-terminated prepolymers may account for 5 wt% to 70 wt% (e.g., from 20 wt% to 65 wt% and/or from 35 wt% to 60 wt%) of the total weight of the reaction mixture for forming the cured composition.

The isocyanate-terminated prepolymer may be formed by the reaction of another isocyanate component with another isocyanate-reactive component (both different and separate from the isocyanate-component and isocyanate-reactive component for forming the cured composition), in which the isocyanate component is present in stoichiometric excess. For example, when a polyol contains an active hydroxyl group, the reaction of the active hydroxyl group with an isocyanate moiety results in the formation of a urethane linkage, as such the prepolymer may include both a urethane linkage and an isocyanate terminal group. For example, the prepolymer may be prepared in a one-pot procedure using at least one polyether polyol. As an example, the polyether polyol(s) used in preparing the prepolymer is derived from propylene oxide, ethylene oxide, and/or butylene oxide.

An isocyanate index for the base composition is from 95 to 300 (e.g., 101 to 200, 110 to 150, etc.). By isocyanate index, it is meant a ratio of equivalents of isocyanate groups in the reaction mixture for forming the cured composition to the active hydrogen atoms in the reaction mixture for forming the cured composition, for forming the polyurethane polymers, multiplied by 100. Said in another way, the isocyanate index is the molar equivalent of isocyanate (NCO) groups divided by the total molar equivalent of isocyanate-reactive hydrogen atoms present in a formulation, multiplied by 100. As would be understood by a person of ordinary skill in the art, the isocyanate groups in the reaction mixture for forming the cured composition may be provided through the isocyanate component, and the active hydrogen atoms may be provided through the isocyanate reactive component. The isocyanate index for forming the isocyanate-terminated prepolymer may be greater than 200.

The isocyanate-reactive component for forming the binder that includes the polyurethane based matrix (including a polyurethane/epoxy hybrid based matrix) includes one or more polyols. The one or more polyols may have a number average molecular weight from 60 g/mol to 6000 g/mol (e.g., 150 g/mol to 3000 g/mol, 150 g/mol to 2000 g/mol, 150 g/mol to 1500 g/mol, 150 g/mol to 1000 g/mol, 200 g/mol to 900 g/mol, 300 g/mol to 800 g/mol, 400 g/mol to 700 g/mol, 500 g/mol to 700 g/mol, etc.). The one or more polyols have on average from 1 to 8 hydroxyl groups per molecule, e.g., from 2 to 4 hydroxyl groups per molecule. For example, the one or more polyols may independently be a diol or triol. The isocyanate-reactive component may include at least 80 wt% and/or at least 90 wt% of one or more polyols.

The one or more polyols may be alkoxylates derived from the reaction of propylene oxide, ethylene oxide, and/or butylene oxide with an initiator. Initiators known in the art for use in preparing polyols for forming polyurethane polymers may be used. For example, the one or more polyols may be an alkoxylate of any of the following molecules, e.g., ethylene glycol, diethylene glycol, triethylene glycol, 1,2-propanediol, dipropylene glycol, tripropylene glycol, 1,4-butanediol, 1,6-hexanediol, trimethylolpropane, sorbitol, sucrose, and glycerine. According to exemplary embodiments, the one or more polyols may be derived from propylene oxide and ethylene oxide, of which less than 20 wt% (e.g., and greater than 5 wt%) of polyol is derived from ethylene oxide, based on a total weight of the alkoxylate. Exemplary catalysts for forming the polyols include, e.g., potassium hydroxide (KOH), CsOH, boron trifluoride, and double-metal cyanide complex (DMC) catalysts such as a zinc hexacyanocobaltate or a quaternary phosphazenium compound.

For example, the polyol may contain terminal blocks derived from ethylene oxide blocks. According to another exemplary embodiment, the polyol is derived from butylene oxide or a combination of butylene oxide and propylene oxide. For example, the polyol may contain terminal blocks derived from butylene oxide. According to other exemplary embodiments, the polyol may be the initiator themselves as listed above, without any alkylene oxide reacted to it.

In exemplary embodiments, the butylene oxide based polyol may be a polyoxybutylene-polyoxypropylene polyol that includes at least 50 wt%, at least 60 wt%, at least 70 wt%, at least 80 wt%, and/or at least 90 wt% of butylene oxide, and a remainder of at least 5 wt% of propylene oxide and/or ethylene oxide, based on the total alkylene oxide content of the butylene oxide based polyol. In other exemplary embodiments, the butylene oxide based polyol may be an all butylene oxide polyol, i.e., 100 wt% of the alkylene oxide content is butylene oxide.

In exemplary embodiments, the one or more polyols may include at least one polypropylene glycol) based diol having a number average molecular weight from 400 g/mol to 4000 g/mol. For hydrophobicity (which may be desirable for water-repellent concrete) the one or more polyols may include at least one polyol (butylene glycol) based diol having a number average molecular weight from 400 g/mol to 4000 g/mol. The one or more polyols maybe EO-capped to have higher fraction of primary hydroxyl groups as end groups.

In exemplary embodiments, the isocyanate-reactive component may include alkoxylates of ammonia or primary or secondary amine compounds, e.g., as aniline, toluene diamine, ethylene diamine, diethylene triamine, piperazine, and/or aminoethylpiperazine. For example, the isocyanate-reactive component may include polyamines that are known in the art for use in forming polyurethane-polyurea polymers. The isocyanate-reactive component may include one or more polyester polyols having a hydroxyl equivalent weight of at least 500, at least 800, and/or at least 1,000. For example, polyester polyols known in the art for forming polyurethane polymers may be used. The isocyanate-reactive component may include polyols with fillers (filled polyols), e.g., where the hydroxyl equivalent weight is at least 500, at least 800, and/or at least 1,000. The filled polyols may contain one or more copolymer polyols with polymer particles as a filler dispersed within the copolymer polyols. Exemplary filled polyols include styrene/acrylonitrile (SAN) based filled polyols, polyharnstoff dispersion (PHD) filled polyols, and polyisocyanate polyaddition products (PIPA) based filled polyols. The isocyanate-reactive component may include a primary hydroxyl containing alcohol, such as a polybutadiene, a polytetramethylene ether glycol (PTMEG), a polypropylene glycol (PPG), a polyoxypropylene, and/or a polyoxyethylene-polyoxypropylene.

Exemplary available polyol based products include VORANOL^{™} products, TERAFORCE^{™} Polyol products, VORAPEL^{™} products, SPECFLEX^{™} products, VORALUX^{™} products, PARALOID^{™} products, VORARAD^{™} products, HYPERLAST^{™} products, VORANOL^{™} VORACTIV^{™} products, and SPECFLEX^{™} ACTIV, available from The Dow Chemical Company.

The isocyanate-reactive component for forming the polyurethane based matrix may further include a catalyst component. The catalyst component may include one or more catalysts. Catalysts known in the art, such as trimerization catalysts known in art for forming polyisocyanates trimers and/or urethane catalyst known in the art for forming polyurethane polymers and/or coatings may be used. In exemplary embodiments, the catalyst component may be pre-blended with the isocyanate-reactive component, prior to forming the coating (e.g., an undercoat or a sulfide recovery outer coating).

Exemplary trimerization catalysts include, e.g., amines (such as tertiary amines), alkali metal phenolates, alkali metal alkoxides, alkali metal carboxylates, and quaternary ammonium carboxylate salts. The trimerization catalyst may be present, e.g., in an amount less than 5 wt%, based on the total weight of the isocyanate-reactive component. Exemplary urethane catalyst include various amines, tin containing catalysts (such as tin carboxylates and organotin compounds), tertiary phosphines, various metal chelates, and metal salts of strong acids (such as ferric chloride, stannic chloride, stannous chloride, antimony trichloride, bismuth nitrate, and bismuth chloride). Exemplary tin-containing catalysts include, e.g., stannous octoate, dibutyl tin diacetate, dibutyl tin dilaurate, dibutyl tin dimercaptide, dialkyl tin dialkylmercapto acids, and dibutyl tin oxide. The urethane catalyst, when present, may be present in similar amounts as the trimerization catalyst, e.g., in an amount less than 5 wt%, based on the total weight of the isocyanate-reactive component. The amount of the trimerization catalyst may be greater than the amount of the urethane catalyst. For example, the catalyst component may include an amine based trimerization catalyst and a tin-based urethane catalyst.

### Adhesion promoter coating

Adhesion promoter coating forms an outermost layer on the pre-coated aggregates. The adhesion promoter coating includes one or more layers and includes one or more silane based adhesion promoters. The one or more adhesion promoters may each be a silane based compound. Examples of silane based adhesion promoters include aminosilanes and/or an epoxysilanes.

For example, the coating be formed using a primary aminofunctional silane, a secondary aminofunctional silane, a primary epoxyfunctional silane, and/or a secondary epoxyfunctional silane (a specific silane useable for the coating may be covered by one or more of the descriptors). The epoxyfunctional silane may be a glycidol epoxy functional silane. The aminofunctional and epoxyfunctional silanes may be combined with a methoxysilane, to form the aminosilane compound and/or an epoxysilane compound.

Exemplary adhesion promoters include XIAMETER^{®} products, available from The Dow Chemical Company, and Silquest^{™}, available from Momentive Performance Materials. Exemplary adhesion promoters include aminopropyltriethoxysilane, aminoethylaminopropyltrimethoxysilane, glycidoxypropyltrimethoxysilane, and/or glycidyloxypropyltriethoxysilane based adhesion promoters.

### Additives

Various additives may be added to adjust characteristics of base composition, binder and/or coating(s), e.g., additives known to those of ordinary skill in the art may be used. Additives may be added as part of the isocyanate component and/or the isocyanate-reactive component. Additives may be added in combination with the one or more adhesion promoters. Exemplary additives include a catalyst, an additional adhesion promoter (separate from the adhesion promoter coating of the pre-coated aggregates), a moisture scavenger, a curative, a pH neutralizer, a plasticizer, a compatibilizer, a filler (such as functional fillers, silica based fillers, and mineral based fillers), pigments/dyes, and/or a crosslinker.

A catalyst component may be added that includes at least one catalyst, e.g., may be added to the isocyanate-reactive component. For example, the catalyst component may have tin and/or amine based catalysts, e.g., that accounts for less than 5 wt% of a total weight of the isocyanate-reactive component. For example, a commercially available catalyst may be used. The catalysts may be used in small amounts, such as from 0.0015 wt% to 5 wt% (e.g., 0.01 wt% to 1.0 wt%, etc.). Examples of catalysts include tertiary amines, tin carboxylates, organotin compounds, tertiary phosphines, various metal chelates, and/or metal salts of strong acids (such as ferric chloride, stannic chloride, stannous chloride, antimony trichloride, bismuth nitrate, and bismuth chloride).

The additional adhesion promoter component may be added that includes at least one adhesion promoter, e.g., may be added to the isocyanate-reactive component. For example, the adhesion promoter component may include at least one silane based adhesion promoter. If included, the optional adhesion promoter may account for less than 5 wt% of a total weight of the isocyanate-reactive component.

A moisture scavenger component may be added that includes at least one moisture scavenger, e.g., may be added to the isocyanate-reactive component. If included, the moisture scavenger component may account for 1 wt% to 20 wt% (e.g., 1 wt% to 15 wt%, 1 wt% to 10 wt%, 1 wt% to 5 wt%, 2 wt% to 5 wt%, etc.) of the total weight of the isocyanate-reactive component. Exemplary moisture scavengers include zeolites or molecular sieves, reactive silanes (such as vinyltrialkoxysilanes), and minerals (such as calcium oxide).

Fillers may be present to provide desired rheological properties, mechanical reinforcement, chemical resistance, and/or reduce cost. The fillers may be added to the isocyanate-reactive component and/or the isocyanate component. Examples of fillers include inorganic particulate materials such as talc, titanium dioxide, calcium carbonate, calcium oxide, silica, mica, wollastonite, fly ash, metal particles, carbon black, graphite, high melting organic polymers, and/or reinforcements. Fillers also include reinforcements type fillers, e.g., flake or milled glass and/or fumed silica, which may be used to impart certain properties. Fillers may constitute up to 90% by weight of the mixture for forming the cured composition.

A plasticizer may be present. If present, the plasticizer may be mixed with the isocyanate-reactive component, e.g., to reduce its viscosity to facilitate mixing with the isocyanate component, which may have a lower viscosity. The plasticizer may enable higher filler loading, reduce cost, and/or reduce modulus. Examples of suitable plasticizers include liquid (at 25°C) esters of monocarboxylic acids and diesters of dicarboxylic acids having molecular weights of up to about 300.

Pigment and/or dyes may be present, e.g., titanium dioxide and/or carbon black, may be used to impart color properties. Other additives include, e.g., UV stabilizers, antioxidants, and air release agents, which may be independently used depending on the desired characteristics.

The one or more curatives (i.e., curative agents) may include an amine based curative such as a polyamine and/or an hydroxyl based curative such as a polyol. For example the one or more curatives may include one or more polyols, one or more polyamines, or a combination thereof. Curative known in the art for use in forming coatings may be used. The curative may be added, after first coating the proppant with the preformed aliphatic or cycloaliphatic isocyanurate tri-isocyanate. The curative may act as a curing agent for both the top coat and the undercoat. The curative may also be added, after first coating following the addition of the preformed aliphatic or cycloaliphatic isocyanurate tri-isocyanate in the top coat.

Various optional ingredients may be included in the reaction mixture for forming the controlled release polymer resin based coating, the additive based coating, and/or the above discussed additional coating/layer. For example, reinforcing agents such as fibers and flakes that have an aspect ratio (ratio of largest to smallest orthogonal dimension) of at least 5 may be used. These fibers and flakes may be, e.g., an inorganic material such as glass, mica, other ceramic fibers and flakes, carbon fibers, organic polymer fibers that are non-melting and thermally stable at the temperatures encountered in the end use application. Another optional ingredient is a low aspect ratio particulate filler, that is separate from the proppant. Such a filler may be, e.g., clay, other minerals, or an organic polymer that is non-melting and thermally stable at the temperatures encountered in stages (a) and (b) of the process. Such a particulate filler may have a particle size (as measured by sieving methods) of less than 100 µm. With respect to solvents, the undercoat may be formed using less than 20 wt % of solvents, based on the total weight of the isocyanate-reactive component.

### Aggregates

Exemplary aggregates include sand, siliceous chalk, gravel, greywacke, sandstone, limestone, and ceramic particles (for instance, aluminum oxide, silicon dioxide, titanium dioxide, zinc oxide, zirconium dioxide, cerium dioxide, manganese dioxide, iron oxide, calcium oxide, and/or bauxite). The aggregates are coated with polymers, e.g. to improve mesh effective strength (e.g., by distributing the pressure load more uniformly), to trap broken pieces under the surface (e.g., to reduce the possibility of the broken compromising the upper surface of the concrete), and/or to bond individual particles together when under intense pressure. The aggregates to be coated may have an average particle size from 50 µm to 3000 µm (e.g., 100 µm to 2000 µm). The aggregates may also be coated to have varying average particle sizes in order to provide a polymer concrete composition that includes aggregates of varies average particle sizes.

Aggregate (grain or bead) size may be related to performance of the resultant polymer concrete. Particle size may be measured in mesh size ranges, e.g., defined as a size range in which 90% of the proppant fall within. In exemplary embodiments, the aggregate is sand that has a mesh size of 20/40. Lower mesh size numbers correspond to relatively coarser (larger) particle sizes.

### Coating Process of Pre-Coated Aggregate

To pre-coated the aggregate, one or more coatings may be formed on (e.g., directly on) the aggregate and/or the optional underlying undercoat. In a first stage of forming coated aggregates, solid core aggregate particles (e.g., which do not have a previously formed resin layer thereon) may be heated to an elevated temperature. For example, the aggregate particles may be heated to a temperature from 50°C to 250°C, e.g., to accelerate crosslinking in the applied coating. For example, the coating temperature may be from 80 °C to 140 °C and/or 100°C and to 120°C. The pre-heat temperature of the solid core aggregate particles may be less than the coating temperature for the coatings formed thereafter. The temperature for forming the pre-coated aggregates may be greater (e.g., at least 25°C and/or at least 50°C greater and optionally less than 150°C greater) than the temperature for forming the binder (i.e., the temperature at which the isocyanate component and isocyanate-reactive component of the base composition are reacted). For example, the binder may be prepared at ambient conditions (temperature and pressure), while the pre-coated aggregates may be coated at the higher coating temperatures.

Next, the heated aggregate particles may be sequentially blended (e.g., contacted) with the desired components for forming the one or more coatings, in the order desired. For example, the aggregate particles may be blended with a formulation that includes one or more silane based adhesion promoters. In exemplary embodiments, a process of forming the one or more coatings may take less than 10 minutes, after the stage of pre-heating the aggregate particles and up until right after the stage of stopping the mixer.

The mixer used for the coating process is not restricted. For example, as would be understood by a person of ordinary skill in the art, the mixer may be selected from mixers known in the specific field. For example, a pug mill mixer or an agitation mixer can be used. The mixer may be a drum mixer, a plate-type mixer, a tubular mixer, a trough mixer, or a conical mixer. Hobart mixers can be used. Mixing may be carried out on a continuous or discontinuous basis. It is also possible to arrange several mixers in series or to coat the aggregates in several runs in one mixer. In exemplary mixers it is possible to add components continuously to the heated aggregates. For example, isocyanate component and the isocyanate-reactive component may be mixed with the aggregate particles in a continuous mixer in one or more steps to make one or more layers of curable coatings.

Any coating formed on the aggregates may be applied in more than one layer. For example, the coating process may be repeated as necessary (e.g. 1-5 times, 2-4 times, and/or 2-3 times) to obtain the desired coating thickness. The thicknesses of the respective coatings of the aggregate may be adjusted. For example, the coated aggregates may be used as having a relatively narrow range of aggregate sizes or as a blended having aggregates of other sizes and/or types. For example, the blend may include a mix of aggregates having differing numbers of coating layers, so as to form an aggregate blend having more than one range of size and/or type distribution. The coating may be formed on a pre-formed polymer resin coated article (such as an aggregate).

The coated aggregates may be treated with surface-active agents or auxiliaries, such as talcum powder or steatite (e.g., to enhance pourability). The coated aggregates may be exposed to a post-coating cure separate from the addition of the curative. For example, the post-coating cure may include the coated aggregates being baked or heated for a period of time sufficient to substantially react at least substantially all of the available reactive components used to form the coatings. Such a post-coating cure may occur even if additional contact time with a catalyst is used after a first coating layer or between layers. The post-coating cure step may be performed as a baking step at a temperature from 100 °C to 250 °C. The post-coating cure may occur for a period of time from 10 minutes to 48 hours.

The coating may include at least additive embedded on and/or within a polymer resin matrix. The one or more additives may be added during a process of forming the amide based coating and/or may be sprinkled onto a previously coated solid core aggregate. Optionally, the one or more additives may be provided in a carrier polymer. Additives known to those of ordinary skill in the art may be used. Exemplary additives include moisture scavengers, UV stabilizers, demolding agents, antifoaming agents, blowing agents, curatives, pH neutralizers, plasticizers, compatibilizers, flame retardants, flame suppressing agents, smoke suppressing agents, and/or pigments/dyes.

### Polymer Concrete Composition

The polymer concrete composition may be prepared on site of use. For example, the polymer concrete composition may be prepared by mixing an isocyanate component of the base composition, an isocyanate-reactive component of the base composition, and the pre-coated aggregates (in varying orders) on site of intended use. The mixing may be performed at ambient temperature. For example, at a first location (such as in mixer at a high temperature) the one or more adhesion promoter pre-coated aggregates may be prepared. At a second location (such as the site of intended use) the one or more adhesion promoter pre-coated aggregates, the isocyanate component, and the isocyanate-reactive component may be mixed (e.g., at ambient temperature) to form the polymer concrete composition. The second location may be different from the first location. The polymer concrete composition may be further cured at the second location.

The polymer concrete composition may be mixed using a sufficiently large container (such as a bucket) and a high torque paddle mixer. To avoid/minimize splashing, a variable speed mixer may be used. In an exemplary process, agitating of the aggregates (pre-coated aggregates and/or uncoated aggregates) is started first with the mixer before the base composition is poured onto the aggregates. This process may avoid/minimize splashing of the base composition which starts off as a liquid. In another exemplary process, the base composition may be added to the container and the aggregates thereafter.

All parts and percentages are by weight unless otherwise indicated. All molecular weight information is based on number average molecular weight, unless indicated otherwise.

### Examples

Approximate properties, characters, parameters, etc., are provided below with respect to various working examples, comparative examples, and the materials used in the working and comparative examples.

### Adhesion Promoter Pre-coated Aggregate

| | |
|---|---|
| Sand | Northern White Frac Sand, having a 20/40 mesh size. |
| Adhesion Promoter | An gamma-aminopropyltrimethoxysilane based adhesion promoter (available as Silquest^{™} A-1100 from Momentive Performance Materials^{®}). |

The adhesion promoter pre-coated aggregate is prepared by using a process in which from 2000 grams of the Sand is heated to a temperature of up to 120 °C in an oven. Then, the heated Sand is introduced into a KitchenAid^{®} mixer equipped with a heating jacket (configured for a temperature of about 70°C), to start a mixing process. During the above process, the heating jacket is maintained at 60% maximum voltage (maximum voltage is 120 volts, where the rated power is 425W and rated voltage is 240V for the heating jacket) and the mixer is set to medium speed (speed setting of 5 on based on settings from 1 to 10). In the mixer, the heated Sand is allowed to attain a temperature of approximately 110°C. Next, 1.6 mL of the Adhesion Promoter is added to the mixture. Next, the mixture is allowed to run for 60 additional seconds and the resultant adhesion promotor treated aggregate is cooled, sieved, and collected.

### Polymer Concrete with Adhesion Promoter Pre-treated Aggregate

| | |
|---|---|
| Component 1 | Isocyanate component of a two-component polyurethane binder system (available as HYPERLAST^{™} LU 1011 from The Dow Chemical Company). |
| Component 2 | Isocyanate-reactive component of a two-component polyurethane binder system (available as HYPERLAST^{™} LP 5046 from The Dow Chemical Company). |

The polymer concrete of Working Examples 1, 2, and 3 and Comparative Example A are prepared according to the formulations in Table 1. The Working Examples 1-3 are prepared without adding any additional catalyst (such as the dibutyltin dilaurate based catalyst) and Working Example A is prepared using less than 0.1 wt% of Catalyst 1. To prepare the samples, Component 1 and 2 are poured in a plastic bucket and mixed manually with a mason's trowel for 1 minute. Next, the aggregate (i.e., the Sand, the Polyurethane Pre-coated Aggregate, or mixtures thereof) is added and the resultant mixture is constantly mixing to wet the aggregate with the polymer. Subsequently, the resultant mixture is poured into a 2" x 2" x 2" cubic gang mold and allowed to cure for 24 hours at room temperature.

**Table 1**

| | **Working Ex. 1** | **Working Ex. 2** | **Working Ex. 3** | **Comparative Ex. A** |
|---|---|---|---|---|
| **Formulation (wt%)** | | | | |
| Adhesion Promoter Pre-treated Aggregate | 80 | 40 | 20 | -- |
| Sand | -- | 40 | 60 | 80 |
| Component 1 | 13.2 | 13.2 | 13.2 | 13.2 |
| Component 2 | 6.8 | 6.8 | 6.8 | 6.8 |

| **Properties** | | | | |
|---|---|---|---|---|
| Peak Compressive Stress (psi) | 2203 | 1656^{∗} | 1382^{∗} | 1109 |
| % Compression Strain at Peak Stress (%) | 15.5 | 13.2^{∗} | 12.1^{∗} | 11.0 |

| | | | | |
|---|---|---|---|---|
| ^{∗}Values are estimates based on linear extrapolation | | | | |

Referring to the above, a trend of increasing compressive strength is observed as raw sand and coated sand are mixed together in different proportions. The system with 100% raw sand (i.e., Sand) resulted in the least compressive strength and the system with 100% coated sand (i.e., Polyurethane Pre-coated Aggregate) resulted in the maximum compressive strength. Further, when the coated sand is used, it was found the need for catalyst at this stage was obviated.

In exemplary embodiments, the polymer concrete composition may have a peak compressive stress that is greater than 8.27 MPa (1200 psi) (e.g., greater than 10.34 MPa (1500 psi) and/or greater than 13.79 MPa (2000 psi)). The peak compressive stress may be up to 34.47 MPa (5000 psi). The polyol concrete composition may have a percent compression strain at peak stress that is greater than 8.0% (e.g., greater than 11.0%). The percent compression strain at peak stress may up to 30.0% (e.g., up to 20.0%).

## Claims

1. A method of preparing a polymer concrete composition, the method comprising:
preparing one or more adhesion promoter pre-coated aggregates, each having a base substrate and an adhesion promoter coating including one or more silane based adhesion promoters, the adhesion promoter coating being an outermost layer on the base substrate;
providing a base composition including an isocyanate component and an isocyanate-reactive component, wherein the base composition is curable to form a polyurethane based binder prepared at an isocyanate index from 95 to 300; and
mixing the one or more adhesion promoter pre-coated aggregates, the isocyanate component, and the isocyanate-reactive component to form the polymer concrete composition,
wherein the polyurethane based binder is prepared as the reaction product of the isocyanate component and the isocyanate-reactive component in the presence of the one or more adhesion promoter pre-coated aggregates.

2. The method as claimed in claim 1, wherein the based substrate is heated to a temperature of at least 50 °C prior to forming the adhesion promoter coating on the base substrate.

3. The method as claimed in claim 1 or claim 2, wherein the one or more silane based adhesion promoters are at least one selected from aminosilanes and epoxysilanes.

4. The method as claimed in any one of claims 1 to 3, wherein the one or more adhesion promoter pre-coated aggregates are prepared and cured prior to providing the base composition.

5. The method as claimed in any one of claims 1 to 4, wherein:
at a first location, the one or more adhesion promoter pre-coated aggregates are prepared,
at a second location, the one or more adhesion promoter pre-coated aggregates prepared at the first location, the isocyanate component, and the isocyanate-reactive component are mixed to form the polymer concrete composition, the second location being different from the first location, and
the method further comprises curing the polymer concrete composition at the second location.

6. A method of repairing a concrete substrate, comprising
preparing the polymer concrete composition as claimed in any one of claims 1 to 5, by providing the one or more adhesion promoter pre-coated aggregates in a container, adding the isocyanate component and the isocyanate-reactive component to the container, and mixing the one or more adhesion promoter pre-coated aggregates, the isocyanate component, and the isocyanate-reactive component in the container; and
applying the polymer concrete composition to the concrete substrate.

## Patentansprüche

1. Verfahren zum Herstellen einer Polymerbetonzusammensetzung, das Verfahren umfassend:
Herstellen eines oder mehrerer mit Haftvermittler vorbeschichteter Aggregate, die jeweils ein Basissubstrat und eine Haftvermittlerbeschichtung aufweisen, einschließlich eines oder mehrerer silanbasierter Haftvermittler, wobei die Haftvermittlerbeschichtung eine äußerste Schicht an dem Basissubstrat ist;
Bereitstellen einer Basiszusammensetzung, einschließlich einer Isocyanatkomponente und einer isocyanatreaktiven Komponente, wobei die Basiszusammensetzung härtbar ist, um ein polyurethanbasiertes Bindemittel, das bei einem Isocyanatindex von 95 bis 300 hergestellt wird, auszubilden; und
Mischen des einen oder der mehreren mit Haftvermittler vorbeschichteten Aggregate, der Isocyanatkomponente und der isocyanatreaktiven Komponente, um die Polymerbetonzusammensetzung auszubilden,
wobei das polyurethanbasierte Bindemittel als das Reaktionsprodukt der Isocyanatkomponente und der isocyanatreaktiven Komponente in der Gegenwart des einen oder der mehreren mit Haftvermittler vorbeschichteten Aggregate hergestellt wird.

2. Verfahren nach Anspruch 1, wobei das basierte Substrat vor einem Ausbilden der Haftvermittlerbeschichtung an dem Basissubstrat auf eine Temperatur von mindestens 50 °C erwärmt wird.

3. Verfahren nach Anspruch 1 oder 2, wobei der eine oder die mehreren silanbasierten Haftvermittler mindestens eines, ausgewählt aus Aminosilanen und Epoxysilanen, sind.

4. Verfahren nach einem der Ansprüche 1 bis 3, wobei das eine oder die mehreren mit Haftvermittler vorbeschichteten Aggregate vor dem Bereitstellen der Basiszusammensetzung hergestellt und gehärtet werden.

5. Verfahren nach einem der Ansprüche 1 bis 4, wobei:
an einer ersten Stelle, das eine oder die mehreren mit Haftvermittler vorbeschichteten Aggregate hergestellt werden,
an einer zweiten Stelle, das eine oder die mehreren mit Haftvermittler vorbeschichteten Aggregate, die an der ersten Stelle hergestellt werden, die Isocyanatkomponente und die isocyanatreaktive Komponente gemischt werden, um die Polymerbetonzusammensetzung auszubilden, wobei sich die zweite Stelle von der ersten Stelle unterscheidet und
das Verfahren ferner ein Härten der Polymerbetonzusammensetzung an der zweiten Stelle umfasst.

6. Verfahren zum Reparieren eines Betonsubstrats, umfassend
Herstellen der Polymerbetonzusammensetzung nach einem der Ansprüche 1 bis 5, durch Bereitstellen des einen oder der mehreren mit Haftvermittler vorbeschichteten Aggregate in einem Behälter, Zugeben der Isocyanatkomponente und der isocyanatreaktiven Komponente zu dem Behälter und Mischen des einen oder der mehreren mit Haftvermittler vorbeschichteten Aggregate, der Isocyanatkomponente und der isocyanatreaktiven Komponente in dem Behälter; und
Aufbringen der Polymerbetonzusammensetzung auf das Betonsubstrat.

## Revendications

1. Procédé de préparation d'une composition de béton polymère, le procédé comprenant :
la préparation d'un ou plusieurs agrégats de promoteur d'adhésion prérevêtus, ayant chacun un substrat de base et un revêtement de promoteur d'adhésion comportant un ou plusieurs promoteurs d'adhésion à base de silane, le revêtement de promoteur d'adhésion étant une couche la plus externe sur le substrat de base ;
la fourniture d'une composition de base comportant un composant isocyanate et un composant réactif avec un isocyanate, dans lequel la composition de base est durcissable pour former un liant à base de polyuréthane préparé à un indice d'isocyanate allant de 95 à 300 ; et
le mélange du ou des agrégats de promoteur d'adhésion prérevêtus, du composant isocyanate et du composant réactif avec un isocyanate pour former la composition de béton polymère,
dans lequel le liant à base de polyuréthane est préparé en tant que produit de réaction du composant isocyanate et du composant réactif avec un isocyanate en présence du ou des agrégats de promoteur d'adhésion prérevêtus.

2. Procédé selon la revendication 1, dans lequel le substrat de base est chauffé à une température d'au moins 50 °C avant formation du revêtement de promoteur d'adhésion sur le substrat de base.

3. Procédé selon la revendication 1 ou la revendication 2, dans lequel le ou les promoteurs d'adhésion à base de silane sont au moins un choisi parmi aminosilanes et époxysilanes.

4. Procédé selon l'une quelconque des revendications 1 à 3, dans lequel le ou les agrégats de promoteur d'adhésion prérevêtus sont préparés et durcis avant de fournir la composition de base.

5. Procédé selon l'une quelconque des revendications 1 à 4, dans lequel :
au niveau d'une première localisation, le ou les agrégats de promoteur d'adhésion prérevêtus sont préparés,
au niveau d'une seconde localisation, le ou les agrégats de promoteur d'adhésion prérevêtus préparés au niveau de la première localisation, le composant isocyanate et le composant réactif avec un isocyanate sont mélangés pour former la composition de béton polymère, la seconde localisation étant différente de la première localisation, et
le procédé comprenant en outre le durcissement de la composition de béton polymère au niveau de la seconde localisation.

6. Procédé de réparation d'un substrat en béton, comprenant
la préparation de la composition de béton polymère selon l'une quelconque des revendications 1 à 5, en fournissant le ou les agrégats de promoteur d'adhésion prérevêtus dans un récipient, en ajoutant le composant isocyanate et le composant réactif avec un isocyanate au récipient, et en mélangeant le ou les agrégats de promoteur d'adhésion prérevêtus, le composant isocyanate et le composant réactif avec un isocyanate dans le récipient ; et
l'application de la composition de béton polymère au substrat en béton.
